# EUROPÄISCHE PATENTSCHRIFT

(11) **EP 1 265 941 B1**
(45) Veröffentlichungstag und Bekanntmachung des Hinweises auf die Patenterteilung: **08.02.2006**
(21) Anmeldenummer: 01905771.0
(22) Anmeldetag: 15.02.2001
(51) Int. Cl.: C08G 18/80, C08G 18/08, C09D 175/04, C08J 3/07

(54) **WÄSSRIGE ÜBERZUGSMITTEL FÜR FESTKÖRPERREICHE EINBRENNLACKIERUNGEN**
AQUEOUS COATING AGENTS FOR BAKING ENAMELS WITH A HIGH SOLID CONTENT
AGENTS DE REVETEMENT AQUEUX POUR VERNIS A CUIRE RICHES EN MATIERE SOLIDE

(30) Priorität: 28.02.2000 DE 10009414; 28.02.2000 DE 10009412; 28.02.2000 DE 10009413
(43) Veröffentlichungstag der Anmeldung: 18.12.2002
(73) Patentinhaber: Bayer MaterialScience AG, 51368 Leverkusen (DE)
(72) Erfinder: BAUMBACH, Beate, 51373 Leverkusen (DE); WAMPRECHT, Christian, 41472 Neuss (DE); MÜLLER, Heino, 51377 Leverkusen (DE); PETZOLDT, Joachim, 40789 Monheim (DE)
(86) Internationale Anmeldenummer: PCT/EP2001/001651
(87) Internationale Veröffentlichungsnummer: WO 2001/064770

(56) Entgegenhaltungen:
- EP-A- 0 576 952
- EP-A- 0 805 171
- EP-A- 0 863 173
- EP-A- 0 899 282

## Beschreibung

Die vorliegende Erfindung betrifft neuartige wässrige Überzugsmittel für Einbrennlackierungen, insbesondere für die Herstellung von harten, elastischen, festkörperreichen Füllern mit sehr gutem Steinschlagschutz und deren Verwendung zur Beschichtung von Metallen, Kunststoffen, Holz und Glas.

In den letzten Jahren stieg die Bedeutung wässriger Lacke und Beschichtungen aufgrund immer strengerer Emissionsrichtlinien bezüglich der bei der Lackapplikation frei werdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastbarkeit oftmals noch nicht vollständig erreichen. Insbesondere sind bislang keine aus wässriger Phase zu verarbeitende Beschichtungsmittel auf Polyurethanbasis bekannt, die den hohen Forderungen der Praxis an harte aber gleichzeitige elastische Füller mit hohem Festkörpergehalt zur Beschichtung von Automobilkarosserien bezüglich Filmhärte, Schlagzähigkeit, Steinschlagbeständigkeit sowie Wasser- und Chemikalienbeständigkeit vollständig genügen.

Diese Feststellung gilt sowohl für die GB-A 1 444 933, die EP-A 0 061 628 und die DE-A 2 359 613, die sich mit der hydrophilen Modifizierung von aromatischen Polyisocyanaten befassen, als auch für die DE-A 4 001 783, die sich mit speziellen anionisch modifizierten aliphatischen Polyisocyanaten befaßt, als auch für die Systeme der DE-A 2 456 469, der DE-A 2 814 815, der EP-A 0 012 348 und der EP-A 0 424 697, die sich mit wässrigen Einbrennbindemitteln auf Basis von blockierten Polyisocyanaten und organischen Polyhydroxylverbindungen befassen. Auch die Systeme auf Basis von carboxylgruppenhaltigen Polyurethanprepolymeren mit verkappten Isocyanatgruppen gemäß DE-A 2 708 611 bzw. die blockierten, wasserlöslichen Urethanprepolymerisate gemäß DE-A 3 234 590 sind für den genannten Einsatzbereich weitgehend unbrauchbar. Deutliche Fortschritte bezüglich Elastizität und Lösemittel-, Wasser- bzw. Chemikalienbeständigkeit sind mit den Systemen der DE-A 4 221 924, die Kombinationen aus speziellen, blockierten, in Wasser löslichen oder dispergierbaren Polyisocyanatgemischen und speziellen, in Wasser löslichen oder dispergierbaren Polyhydroxylverbindungen beschreibt, zu erzielen. Weitere Verbesserungen hinsichtlich der erforderlichen Einbrenntemperatur bzw. Reaktivität von Einbrennlacken lassen sich erzielen, wenn wasserverdünnbare bzw. in Wasser dispergierbare Polyisocyanatvernetzer mit Pyrazolen als Blockierungsmittel verwendet werden, wie z. B. beschrieben in der WO 97/12924 und der EP-A 0 802 210.

Der Festkörpergehalt einschließlich Bindemitteln, Vemetzer, Additive, Pigmente und Füllstoffe, dieser beschriebenen und zum Teil im Praxiseinsatz befindlichen wässrigen Füller liegt bei Verarbeitungsviskosität im allgemeinen zwischen 47 und 50, maximal 53 Gew.-%. Wünschenswert ist in diesen Zusammenhang jedoch ein wesentlich höherer Festkörpergehalt, um den Auftragswirkungsgrad bei der Applikation deutlich zu verbessern. Weiterhin wird eine wesentlich höhere Härte für eine bessere Schleifbarkeit der Füller gefordert, wobei gleichzeitig gute Elastizitätseigenschaften ein hohes Steinschlagschutzniveau garantieren sollen.

Wie jetzt überraschenderweise gefunden wurde, gelingt die Herstellung von aus wässriger Phase zu verarbeitenden Einbrennfüllern, die neben den von bisherigen Füllern in der Praxis erfüllten Forderungen einen höheren Festkörpergehalt aufweisen und nach dem Einbrennen Beschichtungen mit sehr hoher Härte aber gleichzeitig sehr guten Steinschlagschutzeigenschaften ergeben, wenn als Bindemittel ausgewählte Kombinationen der nachstehend näher beschriebenen Art verwendet werden. Die erfindungsgemäßen Einbrennlacke bestehen aus:
I) speziellen in Wasser dispergierten blockierten Polyisocyanaten,
II) in Wasser löslichen oder dispergierbaren Polyhydroxylverbindungen,
III) gegebenenfalls in Wasser löslichen oder dispergierbaren Vernetzerharzen und
IV) gegebenenfalls weiteren in Wasser löslichen oder dispergierbaren Substanzen.

Durch die Verwendung dieser neuen, erfindungsgemäßen Bindemittelgemische in wässrigen Einbrennlacken können sehr hohe Festkörpergehalte erzielt werden. Somit ist eine Erhöhung der Auftragseffizienz bzw. Ergiebigkeit gegeben. Bei Fülleranwendungen werden Beschichtungen erhalten, bei denen die Härte und damit auch die Schleifbarkeit sowie der Decklackstand im Vergleich zum Stand der Technik deutlich verbessert sind.

Gegenstand der Erfindung sind Bindemittelgemische für wässrige Einbrennlacke aus:
I) speziellen in Wasser dispergierten blockierten Polyisocyanaten,
II) in Wasser löslichen oder dispergierbaren Polyhydroxylverbindungen,
III) gegebenenfalls in Wasser löslichen oder dispergierbaren Vernetzerharzen und
IV) gegebenenfalls weiteren in Wasser löslichen oder dispergierbaren Substanzen,

dadurch gekennzeichnet, dass die Komponente I) aus
A) 40 bis 80 Gew.-% einer oder mehrerer Polyisocyanatkomponenten,
B) 10 bis 40 Gew.-% eines oder mehrerer im Sinne der Isocyanat-Additionsreaktion monofunlaioneller Blockierungsmittel für Isocyanatgruppen,
C) 1 bis 30 Gew.-% eines oder mehrerer Hydrophilierungsmittel,
D) gegebenenfalls weiteren Vernetzersubstanzen und
E) gegebenenfalls üblichen Zusatzmitteln besteht,

mit der Maßgabe, dass die Komponente I) entweder nach einem Direktdispergierverfahren oder nach dem Phasenumkehrverfahren mittels einer Dispergiervorrichtung mit hoher volumenbezogener Dispergierleistung hergestellt wurde und eine mittlere Teilchengröße der Dispersionspartikel von 0,05 bis 10 µm, vorzugsweise 0,1 bis 5 µm, insbesondere 0,15 bis 2,5 µm und besonders bevorzugt 0,2 bis 1,5 µm Teilchendurchmesser aufweist.

Für die Herstellung der erfindungswesentlichen Dispersionen I) durch Dispergierprozesse gelangen Dispergiervorrichtungen mit hoher volumenbezogener Dispergierleistung, wie z. B. Druckentspannungshomogenisierdüsen, zur Anwendung.

Entsprechende Dispergiermaschinen sind z. B. aus Formation of Emulsions, in P. Beche, Encyclopedia of Emulsion Technology, Vol. 1, New York, Basel, Decker 1983 bekannt, wurden aber zur Herstellung von solchen wässrigen Dispersionen für wässrige Einbrennfüller bisher noch nicht eingesetzt.

Dispergiermaschinen werden nach der Größe der volumenbezogenen Leistung ausgewählt. Zur Herstellung von feinteiligen Dispersionen (ca. 1 µm Teilchendurchmesser) sind Dispergiermaschinen mit hohen volumenbezogenen Leistungen erforderlich, z. B. Hochdruckhomogenisatoren. Mit Rotor/Stator-Maschinen lassen sich so feinteilige Dispersionen nicht mehr gut herstellen. Bei dem in der EP-A 0 101 007 beschriebenen Strahldispergator handelt es sich um eine spezielle Druckentspannungsdüse, die einen wesentlich höheren Wirkungsgrad als Hochdruckhomogenisatoren hat. Schon bei 50 bar Homogenisierdruck werden mit dem Strahldispergator Partikelgrößenverteilungen erreicht, für die man bei dem Hochdruckhomogenisator 200 bar benötigt.

Mit dem Strahldispergator als Dispergiervorrichtung lassen sich besonders vorteilhaft feinteilige Dispersionen, sowohl kontinuierlich als auch diskontinuierlich herstellen.

Erfindungsgemäß kann auch die wässrige Dispersion durch Phasenumkehr von einer Wasser-in-Öl-Emulsion in eine Öl-in-Wasser-Emulsion überführt werden.

Die erfindungsgemäß hergestellten, erfindungswesentlichen wässrigen Dispersionen I) können in Kombination mit den Komponenten II), III) und gegebenenfalls IV) zur Einbrennlackierung auf beliebigen, hitzeresistenten Substraten verwendet werden, z.B. als Füller, Basis- oder Decklacke zur Herstellung von Einschicht- und/oder Mehrschichtlackierungen, beispielsweise auf dem Kraftfahrzeugsektor. Die bevorzugte Verwendung liegt im Füllerbereich.

Bei der Komponente A) der erfindungswesentlichen Dispersion I) handelt es sich um aliphatische und/oder cycloaliphatische Biuret-, Isocyanurat-, Urethan-, Uretdion-, Allophanat- und/oder Iminooxadiazindiongruppen aufweisende Polyisocyanate. Es können auch beliebige Mischungen verschiedener Polyisocyanate sowie Polyisocyanate, die mehrere der genannten Gruppierungen enthalten, eingesetzt werden. Zur Herstellung der Polyisocyanate können die bekannten aliphatischen und/oder cycloaliphatischen Diisocyanate eingesetzt werden, aus denen die Polyisocyanate durch bekannte Verfahren, wie z.B. Trimerisierung, Allophanatisierung, Urethanisierung, Biuretisierung, hergestellt werden. Vorzugsweise finden Verwendung 1,6-Diisocyanatohexan (HDI), 1-Isocyanato-3,3,5-trimethyl-5-isocyanatomethylcyclohexan (Isophorondiisocyanat, IPDI), 2,4- und/oder 2,6-Diisocyanato-1-methylcyclohexan und 4,4'-Diisocyanatodicyclohexylmethan (®Desmodur W, Bayer AG). Bevorzugt werden zur Herstellung der Komponente A) Isocyanurat-, Biuret- und/oder Urethangruppen aufweisende Polyisocyanate auf Basis von 1,6-Diisocyanatohexan, Isophorondiisocyanat und ®Desmodur W eingesetzt.

Als Blockierungsmittel B) können die bekannten monofunktionellen Blockierungsmittel, wie z.B. Malonsäureester, Acetessigsäureester, Lactame, Oxime, Pyrazole, Triazole, Imidazole, Amine oder beliebige Gemische dieser Verbindungsklassen, eingesetzt werden. Bevorzugt eingesetzt werden Blockierungsmittel, die im Temperaturbereich bis 180°C, insbesondere bis 160°C abspalten. Bevorzugt sind Butanonoxim, Cyclohexanonoxim und/oder 3,5-Dimethylpyrazol.

Als Hydrophilierungsmittel C) werden interne Emulgatoren, externe Emulgatoren oder beliebige Gemische dieser Verbindungen verwendet.

Als interne Emulgatoren finden Ethylenoxideinheiten enthaltende nichtionischhydrophile Aufbaukomponenten und/oder Carboxylgruppen enthaltende (potentiell) anionische Aufbaukomponenten Verwendung.

Bei den nichtionisch hydrophilen Aufbaukomponenten handelt es sich um Verbindungen, die pro Molekül eine oder zwei gegenüber Isocyanatgruppen reaktionsfähige Gruppen, insbesondere Hydroxylgruppen, aufweisen. Die Polyetherketten dieser Verbindungen bestehen mindestens zu 50 Gew.-%, vorzugsweise zu 100 Gew.-% aus Ethylenoxideinheiten, wobei neben diesen, den gemachten Ausführungen entsprechend, auch Propylenoxideinheiten vorliegen können. Geeignete derartige nichtionisch hydrophile Aufbaukomponenten sind beispielsweise monofunktionelle Polyethylenglykolmonoalkylether mit Molekulargewichten von 350 bis 3 000. Vorzugsweise liegt das Molekulargewicht zwischen 500 und 1 000.

Als (potentiell) anionische Aufbaukomponenten dienen Verbindung mit mindestens einer gegenüber Isocyanatgruppen reaktionsfähigen Gruppe. Vorzugsweise handelt es sich bei diesen Verbindungen um mindestens eine, bevorzugt eine oder zwei Hydroxylgruppen aufweisende Carbonsäuren oder um Salze derartiger Hydroxycarbonsäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybemsteinsäure, Hydroxypivalinsäure oder Gemische derartiger Säuren. Besonders bevorzugt werden Dimethylolpropionsäure und/oder Hydroxypivalinsäure verwendet. Die freien Säuregruppen, insbesondere Carboxylgruppen, stellen die vorstehend genannten "potentiell anionischen" Gruppen dar, während es sich bei den durch Neutralisation mit Basen erhaltenen salzartigen Gruppen, insbesondere Carboxylatgruppen, um die vorstehend angesprochenen "anionischen" Gruppen handelt. Für die Lösung bzw. Dispergierung in Wasser ist eine zumindest teilweise Neutralisation der Carboxylgruppen notwendig. Im allgemeinen werden die Carboxylgruppen zumindest zu 50 % neutralisiert, wobei gegebenenfalls auch ein Überschuß an Neutralisationsmittel zum Einsatz kommen kann.

Als externe Emulgatoren werden übliche Emulgatoren bzw. Dispergiermittel, wie sie z.B. von Johann Bielmann in Lackadditive, WILEY-VCH Verlag GmbH Weinheim, New York, Chichester, Brisbane, Singapore, Toronto 1998, Seiten 87 - 92 beschrieben sind, verwendet. Besonders geeignete Substanzen sind beispielsweise Anlagerungsprodukte von Ethylenoxid und gegebenenfalls Propylenoxid an hydrophobe Startermoleküle, wie z.B. Nonylphenol, Phenol/Styrolkondensate und langkettige, gegebenenfalls verzweigte, Alkohole, wie Laurylalkohol oder Stearylalkohol. Auch ionische Verbindungen dieser Art, wie beispielsweise Ethylenoxid- und gegebenenfalls Propylenoxideinheiten aufweisende Schwefel- oder Phosphorsäureestersalze, wie z. B. in der WO 97/31960 beschrieben, sind geeignet.

Bei der gegebenenfalls zum Einsatz kommenden zusätzlichen Vernetzerkomponente D) handelt es sich um Substanzen, die durch chemische Reaktion mit den Hydroxylgruppen der Komponente II) zu einer Aushärtung der erfindungsgemäßen Überzüge führen. Beispielhaft zu nennen sind Aminoplastharze, z. B. entsprechende Melamin-Derivate, wie alkoxylierte Melaminharze oder Melamin-Formaldehyd-Kondensationsprodukte (z. B. FR-A 943 411, "The Chemistry of Organic Filmformers", Seiten 235 - 240, John Wiley & Sons Inc., New York 1974) und übliche Vernetzungsmittel, z.B. mit alkoholischen Hydroxylgruppen reaktionsfähige Epoxide, Carbonsäureanhydride, Phenolplastharze, Resolharze, Harnstoffharze oder Guanidinharze bzw. deren Gemische.

Bei den gegebenenfalls zur Anwendung kommenden üblichen Zusatzmitteln E) handelt es sich beispielsweise um Neutralisationsmittel, Katalysatoren, Hilfsstoffe und/oder Additive, wie z.B. Netz- und Dispergiermittel, Entgasungsmittel, Antiabsetzmittel, Verlaufsmittel, Radikalfänger, Antioxidantien, UV-Absorber, Verdicker, geringe Anteile an Lösemitteln und Bioziden.

Die Herstellung der erfindungswesentlichen Dispersion I) erfolgt mehrstufig, wobei die Mengenverhältnisse der Reaktionspartner so gewählt werden, dass das Äquivalentverhältnis von Isocyanatgruppen der Komponente A) zu gegenüber Isocyanatgruppen reaktionsfähigen Gruppen der Komponente B) und gegebenenfalls C) bei 1:0,5 bis 1:2, vorzugsweise bei 1:0,8 bis 1:1,2 und besonders bevorzugt bei 1:0,9 bis 1:1 liegt.

Im Falle der Verwendung interner Emulgatoren als Komponente C) liegen gegenüber Isocyanatgruppen reaktive Hydroxylgruppen vor. Hierbei werden zur Herstellung der erfindungswesentlichen Dispersion I) die Mengenverhältnisse der Reaktionspartner so gewählt werden, dass das Äquivalentverhältnis von Isocyanatgruppen der Komponente A) zu gegenüber Isocyanatgruppen reaktionsfähigen Gruppen der Komponenten B) und C) bei 1:0,5 bis 1:2, vorzugsweise bei 1:0,8 bis 1:1,2 und besonders bevorzugt bei 1:0,9 bis 1:1 liegt.

Bei der Verwendung nichtionisch hydrophiler Aufbaukomponenten wird die Menge der Komponente C) so bemessen, dass in der erhaltenen erfindungswesentlichen Dispersion I) 0,1 bis 10 Gew.-%, vorzugsweise 0,5 bis 5 Gew.-%, an innerhalb von end- und/oder seitenständig angeordneten Polyetherketten eingebauten Ethylenoxideinheiten (berechnet als C₂H₄O, Molekulargewicht = 44) vorliegen.

Bei der Verwendung (potentiell) anionischer Aufbaukomponenten gelangt die Komponente C) in einer sochen Menge zum Einsatz, dass in der erhaltenen erfindungswesentlichen Dispersion I) 0,1 bis 5 Gew.-%, vorzugsweise 0,5 bis 1,5 Gew.-%, an chemisch fixierten Carboxylgruppen (berechnet als COOH, Molekulargewicht = 45) vorliegen.

Im Falle der Verwendung externer Emulgatoren als Komponente C) liegen keine gegenüber Isocyanatgruppen reaktionsfähigen Gruppen vor. Hierbei werden zur Herstellung der erfindungswesentlichen Dispersion I) die Mengenverhältnisse der Rektionspartner so gewählt, dass das Äquivalentverhältnis von Isocyanatgruppen der Komponente A) zu gegenüber Isocyanatgruppen reaktionsfähigen Gruppen der Komponenten B) bei 1:0,8 bis 1:1,2, vorzugsweise bei 1:0,9 bis 1:1 liegt. Die Einsatzmenge der externen Emugatoren C) bezogen die Gesamtmenge der Komponenten A), B) und C) liegt bei 1 bis 10 Gew.-%, vorzugsweise bei 3 bis 7 Gew.-% und besonders bevorzugt bei 4 bis 6 Gew.-%.

Zur Herstellung der Komponente I) wird das Polyisocyanat A) in beliebiger Reihenfolge oder gleichzeitig mit dem Blockierungsmittel B) und gegebenenfalls einem internen Hydrophilierungsmittel C) im oben angegebenen NCO/OH-Äquivalentverhältnis umgesetzt. Falls kein internes Hydrophilierungsmittel verwendet wird, erfolgt vor, während oder nach der Umsetzung der Komponenten A) und B) im oben angegebenen NCO/OH-Äquivalentverhältnis das Zumischen eines externen Emulgators C) im oben angegebenen Mengenverhältnis.

Die Umsetzungen erfolgen in der Regel in einem Temperaturbereich von 20 bis 140°C, vorzugsweise bei 70 bis 120 °C, wobei besonders die Umsetzung mit (potentiell) anionischen Aufbaukomponenten C) unter milden Bedingungen durchgeführt wird, um zu verhindern, dass auch die Carboxylgruppe mit den Isocyanatgruppen reagiert.

Die Umsetzungen können lösemittelfrei oder in einem inerten Lösemittel durchgeführt werden. Bevorzugt ist die Umsetzung in solchen inerten Lösemitteln, die nach dem Emulgierschritt durch Vakuumdestillation vollständig oder teilweise aus der wässrigen Phase einer Dispersion entfernt werden können. Beispielhaft genannt seien Ketone, wie Aceton und Methylethylketon und Ester, wie Ethylacetat und Butylacetat und Aromaten, wie Toluol und Xylol. Besonders bevorzugt ist die Umsetzung in Methylethylketon.

Nach beendeter Umsetzung erfolgt, falls eine Hydrophilierung mit einer (potentiell) anionischen Aufbaukomponente C) stattgefunden hat, eine zumindestens teilweise Neutralisation der eingebauten Carboxylgruppen. Die Zugabe des hierzu erforderlichen Neutralisationsmittels kann vor, während oder nach dem Dispergierschritt erfolgen. Hierfür geeignete Basen sind Ammoniak, Amine, wie z.B. N-Methylmorpholin, Dimethylisopropanolamin, Triethylamin, N,N-Dimethylethanolamin, Methyldiethanolamin, Triethanolamin, Morpholin, Tripropylamin, Triisopropylamin, 2-Diethylamino-2-methyl-1-propanol bzw. Gemische dieser und anderer Neutralisationsmittel. Ebenfalls geeignet, jedoch weniger bevorzugt als Neutralisationsmittel sind Alkali- oder Erdalkalihydroxyde, wie z.B. Natriumhydroxid, Lithiumhydroxid oder Kaliumhydroxid. Bevorzugtes Neutralisationsmittel ist N,N-Dimethylethanolamin.

Zur Herstellung der wässrigen Suspension wird die organische Lösung des Umsetzungsproduktes aus den Komponenten A), B) und gegebenenfalls C) mit Wasser vermischt. Dies geschieht entweder nach dem Direktdispergierverfahren, wobei die organische Phase in die wässrige Phase dispergiert wird, oder nach dem Phasenumkehrverfahren, wobei eine zunächst vorliegende Wasser-in-Öl-Emulsion in eine Öl-in-Wasser-Emulsion überführt wird. Dies erfolgt unter Zuhilfenahme einer Dispergiervorrichtung mit hoher volumenbezogener Dispergierleistung. Dabei kann es sich z.B. handeln um Käfigrührer, Dissolver, Rotor/Stator-Mischer, Druckentspannungsdüsen, bevorzugt Strahldispergatoren, wobei die volumenbezogene Dispergierleistung für den Dispergierprozeß bei 1 bis 10⁸ W/cm³, vorzugsweise bei 1 bis 5·10⁷ W/cm³ und besonders bevorzugt bei 1 bis 3·10⁷ W/cm³ liegt. Die mittlere Teilchengröße der Partikel der wässrigen Dispersion bzw. Suspension liegt bei 0,05 bis 10 µm, vorzugsweise 0,1 bis 5 µ, insbesondere 0,15 bis 2,5 µm und besonders bevorzugt 0,2 bis 1,5 µm. Um spezielle Teilchengrößenverteilungen zu erhalten ist es sinnvoll, in mehreren Stufen bei definierter volumenbezogener Leistung zu dispergieren.

Es hat sich als vorteilhaft erwiesen, vor dem Dispergiervorgang durch den Strahldispergator zunächst eine Voremulsion mittels eines Rührers oder Dissolvers herzustellen und diese Voremulsion dann dem Strahldispergator zuzuführen. Bei der Herstellung der Dispersionen bzw. Emulsionen wird eine solche Menge Wasser verwendet, dass 20 bis 75 Gew.-%ige, vorzugsweise 30 bis 70 Gew.-%ige und besonders bevorzugt 35 bis 70 Gew.-%ige Dispersionen bzw. Emulsionen der erfindungswesentlichen Bindemittelmittel I) resultieren. Nach beendeter Wasserzugabe wird das Lösemittel, vorzugsweise im Vakuum, destillativ entfernt.

Die Dispergierung kann in einem breiten Temperaturbereich sowohl bei tiefer Temperatur, wie z. B. 10°C, als auch bei höher Temperatur bis deutlich oberhalb des Schmelzpunktes der Polymermischung, wie z. B. 150°C, erfolgen. Bei solchen hohen Temperaturen ist aufgrund der Reaktivität der Bindemittelsysteme nur eine kurzfristige Temperaturbelastung im Sekundenbereich möglich.

Die gegebenenfalls zum Einsatz kommenden weiteren Vernetzersubstanzen D) und die üblichen Zusatzmittel E) können der organischen Lösung des Umsetzungsproduktes aus den Komponenten A), B) und gegebenenfalls C) vor der Dispergierung zugegeben werden. Im Falle von wasserlöslichen oder dispergierbaren Substanzen D) und E) können diese auch nach der Dispergierung und Destillation der wässrigen Phase zugesetzt werden.

Bei der Polyhydroxylkomponente II) handelt es sich beispielsweise um in Wasser lösliche oder dispergierbare Polyhydroxylverbindungen eines durch Gelpermeationschromatographie (Standard Polystyrol) bestimmbaren zahlengemittelten mittleren Molekulargewichts Mn von 1000 bis 100000, vorzugsweise 2000 bis 50000, der an sich aus der Chemie der Polyurethanlacke bekannten Art, vorausgesetzt die Polyhydroxylverbindungen weisen einen zu ihrer Löslichkeit bzw. Dispergierbarkeit in Wasser ausreichenden Gehalt an hydrophilen Gruppierungen, insbesondere Carboxylatgruppen und/oder Ethylenoxideinheiten aufweisende Polyetherketten auf. Grundsätzlich möglich ist allerdings auch die Verwendung von für sich allein nicht ausreichend hydrophilen Polyhydroxylverbindungen in Abmischung mit externen Emuläatoren.

Als Komponente II) in Betracht kommen Polyhydroxypolyester, Polyhydroxypolyether, Polyhydroxypolyurethane, Polyhydroxycarbonate, urethanmodifizierte Polyesterpolyole, urethanmodifizierte Polyetherpolyole, urethanmodifizierte Polycarbonatpolyole oder Hydroxylgruppen aufweisende Polymerisate, d.h. die an sich bekannten Polyhydroxypolyacrylate. Es können jedoch auch Mischungen dieser genannte Polyhydroxylverbindungen, bzw. in situ hergestellte, gegebenefalls gepfropfte, Vertreter von Kombinationen dieser Polyhydroxylverbindungen, wie z. B. Polyesterpolyacrylatpolyole, Polyetherpolyacrylatpolyole, Polyurethanpolyacrylatpolyole, Polyesterpolyurethane, Polyetherpolyurethane, Polycarbonatpolyurethane und Polyetherpolyester oder deren Mischungen als Komponente II) zum Einsatz kommen.

Bei den Polyacrylatpolyolen handelt es sich um an sich bekannte Mischpolymerisate von einfachen Estern der Acryl- und/oder Methacrylsäure, wobei zwecks Einführung der Hydroxylgruppen Hydroxyalkylester wie beispielsweise 2-Hydroxyethyl, 2-Hydroxypropyl-, 2-, 3-, oder 4-Hydroxybutylester dieser Säuren mitverwendet werden. Zur Einführung von Carboxylgruppen, die zwecks Überführung in Carboxylatgruppen mit Aminen neutralisiert werden können, eignen sich z.B. Acryl-und/oder Methacrylsäure. Als mögliche weitere Comonomere kommen olefinisch ungesättigte Verbindungen in Betracht, wie z. B. Vinylaromaten, Acrylnitril, Maleinsäuredi(cyclo)alkylester, Vinylester, Vinylether u. s. w..

Die Polymerisate können einerseits direkt in Wasser unter Zuhilfenahme von Emulgatoren hergestellt werden, wobei Emulsionscopolymerisate entstehen, die auch "Primärdispersionen" genannt werden. Andererseits ist auch die Herstellung in organischen Lösemitteln und, nach Einführung ionischer Gruppen, anschließende Überführung in die wässrige Phase möglich, wobei sogenannte "Sekundärdispersionen" erhalten werden.

Geeignete Polyetherpolyole sind die aus der Polyurethanchemie an sich bekannten Ethoxylierungs- und/oder Propoxylierungsprodukte geeigneter 2- bis 6-wertiger Startermoleküle wie z.B. Wasser, Ethylenglykol, Propandiol, Trimethylolpropan, Glycerin, Pentaerythrit und/oder Sorbit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der soeben beispielhaft genannten Art mit unterschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Um spezielle Molgewichte bzw. Funktionalitäten der Polyesterpolyole einzustellen, besteht auch die Möglichkeit der Verwendung von monofunktionellen Alkoholen, wie z. B. 2-Ethylhexanol oder Cyclohexanol und/oder monofunktionellen Carbonsäuren, wie z. B. 2-Ethylhexansäure, Benzoesäure oder Cyclohexancarbonsäure. Bei der Herstellung der Polyesterpolyole können selbstverständlich beliebige Gemische von mono- und polyfunktionellen Alkoholen oder beliebige Gemische von mono- und polyfunktionellen Carbonsäuren bzw. Carbonsäureanhydriden eingesetzt werden.

Die Herstellung der Polyesterpolyole erfolgt nach bekannten Methoden, wie sie z. B. in Houben-Weyl, Methoden der organischen Chemie, Band XIV/2, G. Thieme-Verlag, Stuttgart, 1963, Seiten 1 bis 47 beschrieben sind.

Die gegebenenfalls erforderliche hydrophile Modifizierung dieser Polyesterpolyole erfolgt nach an sich bekannten Methoden, wie sie beispielsweise in EP-A 0 157 291 oder EP-A 0 427 028 offenbart sind. Die in diesen Veröffentlichungen beschriebenen, in Wasser löslichen bzw. dispergierbaren, urethanmodifizierten Polyester sind erfindungsgemäß als Komponente II) besonders geeignet. Besonders bevorzugt als Komponente II) kommen urethanmodifizierte Polyesterharze in Betracht, wie sie in der DE-A 42 21 924 beschrieben sind. Ebenfalls geeignet, jedoch weniger bevorzugt, sind die in der DE-A 38 29 587 beschriebenen, in Wasser löslichen oder dispergierbaren Hydroxylgruppen aufweisenden Polyacrylate.

Als polyfunktionelle Vemetzerharze III) kommen sowohl in Wasser lösliche oder dispergierbare blockierte Polyisocyanate als auch in Wasser lösliche oder dispergierbare Aminoharze, wie z. B. Melamin- bzw. Harnstoffharze, in Betracht. Prinzipiell geeignet sind die in Wasser löslichen oder dispergierbaren Polyisocyanate, wie sie auch schon zuvor im Stand der Technik genannt wurden. Besonders geeignet sind jedoch die in Wasser löslichen oder dispergierbaren blockierten Polyisocyanate, die in der DE-A 42 21 924 und der DE-A 198 10 660 beschrieben sind.

Es ist auch möglich, schon fertige Mischungen von Vertretern der Komponenten II) und III) als Kombinationspartner für die erfindungswesentliche Komponente I) zu verwenden. Solche fertigen Mischungen befinden sich aufgrund ihrer guten Lagerstabilität bei Raumtemperatur bereits im Praxiseinsatz.

Als weitere, in Wasser dispergierbare Substanzen IV) können beispielsweise Epoxidharze, Phenolharze, Polyaminharze, niedermolekulare Epoxyvernetzer und niedermolekulare Polyaminvernetzer zur Anwendung kommen.

Zur Herstellung von gebrauchsfertigen Beschichtungsmitteln, insbesondere Füllern, werden die erfindungswesentlichen speziellen Dispersionen I) mit den Polyhydroxylverbindungen II), gegebenenfalls den Vernetzern III) und gegebenenfalls Vertretern der Komponente IV) gemischt. Das Mischungsverhältnis bezüglich der Komponenten I) bis III) liegt im Bereich von 50:45:5 bis 5:45:50 Gew.-%, vorzugsweise 45:45:10 bis 10:45:45 Gew.% und besonders bevorzugt 40:45:15 bis 15:45:40 Gew.-% bezogen auf den Feststoff. Vertreter der Komponente IV) können gegebenenfalls in Anteilen bis zu 20 Gew.-%, vorzugsweise 10 Gew.-%, bezogen auf den Feststoff, zum Einsatz kommen. Besonders bevorzugt werden nur Mischungen der Komponenten I) und II) und gegebenenfalls III) eingesetzt. Die so erhaltenen Einkomponenten-Bindemittel sind im allgemeinen beliebig lange lagerfähig. Gegebenenfalls mitzuverwendende Hilfs- und Zusatzmittel der Beschichtungstechnologie, wie beispielsweise Pigmente, Füllstoffe, Verlaufsmittel, Netz- und Dispergiermittel, blasenverhindemde Mittel, Katalysatoren u. dgl. können dem wässrigen Bindemittel bzw. Bindemittelgemisch und/oder den Einzelkomponenten I), II) und gegebenenfalls III) und IV) zugesetzt werden. Von besonderem Vorteil ist es, die Einzelkomponenten I), II) und gegebenenfalls III) und IV) oder I) und die Mischung aus II) und gegebenenfalls III) mit Hilfsmitteln, Pigmenten und Füllstoffen zu gebrauchsfertigen Pasten zu verarbeiten, die dann beliebig innerhalb der oben genannten Grenzen miteinander gemischt werden können. Auf diese Weise lassen sich ganz spezielle Eigenschaften für spezielle Anforderungen erzielen. Es besteht auch die Möglichkeit, manche Additive, wie z. B. Verlaufsmittel oder Katalysatoren, der Komponente I) schon vor deren Dispergierung in Wasser zuzusetzen.

Die die erfindungswesentlichen Dispersionen I) enthaltenden Einkomponenten-Beschichtungsmittel können nach allen beliebigen Methoden der Beschichtungstechnologie, wie z.B. Spritzen, Streichen, Tauchen, Fluten oder mit Hilfe von Walzen und Rakeln, auf beliebige hitzeresistente Substrate ein- oder mehrschichtige aufgetragen werden.

Man erhält beispielsweise Überzüge auf Metall, Kunststoff, Holz oder Glas durch Aushärten des Lackfilms bei 80 bis 220°C, vorzugsweise 100 bis 200°C und besonders bevorzugt 120 bis 180°C.

Die erfindungsgemäßen Bindemittel eignen sich vorzugsweise zur Herstellung von Überzügen und Lackierungen auf Stahlblechen, wie sie beispielsweise zur Herstellung von Fahrzeugkarosserien, Maschinen, Verkleidungen, Fässern oder Containern Verwendung finden. Sie werden bevorzugt verwendet für die Herstellung von Automobilfüllem. Die Lackfilme haben im allgemeinen eine Trockenschichtdicke von 0,01 bis 0,3 mm.

Die erfindungsgemäßen Bindemittel ergeben einen langanhaltenden Oberflächenschutz, wie in den Beispielen demonstriert wird. Besonders die überraschend hohe Steinschlagfestigkeit bei gleichzeitig hoher Filmhärte, was an sich gegensätzliche Eigenschaften sind, ist hervorzuheben. Dies macht die Bindemittel für Anwendungen, bei denen ein guter Steinschlagschutz gepaart mit einer hohen Lackfilmhärte erforderlich ist, in hervorragender Weise geeignet.

Der besondere Vorteil der neuen wässrigen Bindemittel ist neben ihrer hohen Stabilität bei Lagerung sowohl bei Raumtemperatur als auch bei leicht erhöhten Temperaturen von 30 bis 60°C der besonders hohe zu erzielende Festgehalt von ≥ 55 Gew.-%, was von bisher bekannten wässrigen Bindemitteln in aller Regel nicht erreicht wird nicht erreicht wird.

Die nachstehenden Beispiele erläutern die Erfindung, ohne sie jedoch einzuschränken.

### Beispiele

Alle Prozentangaben beziehen sich, falls nicht anders vermerkt, auf das Gewicht.

### Beispiel 1: Herstellung bzw. Beschreibung der Ausgangsstoffe

### 1.1. Polyisocyanatkomponente A1)

In einem 2 l-Vierhalskolben mit Rührer, Gaseinleitungsrohr, Innenthermometer, Tropftrichter und Rückflußkühler, werden 1332 g Isophorondiisocyanat (IPDI) unter Stickstoff vorgelegt und auf 80°C erwärmt. Aus einem Tropftrichter werden innerhalb von 45 Minuten 15 ml einer 5 Gew.-%igen Lösung von 2-Hydroxypropyltrimethylammoniumhydroxid in 2-Ethyl-1,3-hexandiol/Methanol (6:1, Gew.-Teile) langsam und gleichmäßig zugetropft. Hierbei steigt die Temperatur auf 88°C (90°C sollten nicht überschritten werden, weil die Trimerisierung bei zu hohen Temperaturen unspezifisch verläuft und zu höheren Viskositäten des Endprodukts führt). Es wird nach Beendigung des Zutropfens so lange bei 80°C gerührt, bis die Reaktionsmischung einen NCO-Gehalt von 30,6 % erreicht hat. Dann stoppt man durch Zugabe von 0,36 g (70 ppm molar) einer 25 %igen Lösung von Dibutylphosphat in IPDI ab. Überschüssiges monomeres IPDI wird durch Dünnschichtdestillation entfernt. Man erhält ein nahezu farbloses, klares Harz mit einer Ausbeute von 44 %, das 70 %ig in Methylethylketon gelöst wird. Die Viskosität der Lösung bei 23°C liegt bei 300 mPa-s, der Isocyanatgehalt beträgt 11,8 % und der Gehalt an freiem, monomerem IPDI liegt bei 0,18 %.

### 1.2. Polyisocyanatkomponente A2):

®Desmodur N 3300 (Bayer AG), Festkörpergehalt: 100 %; Viskosität bei 23°C: 3500 mPa·s; Isocyanatgehalt: 21,8 %.

### Beispiel 2 Herstellung der erfindungswesentlichen Dispersionen I)

### 2.1. Dispersion I.1):

In einem 1 l-Vierhalskolhen mit Rührer, Innenthermometer und Rückflußkühler werden 355,93 g Polyisocyanatkomponente A1) vorgelegt, in 411,15 g Methylethylketon gelöst und auf 60°C erwärmt. Danach werden 96,13 g 3,5-Dimethylpyrazol unter Rühren portionsweise hinzugegeben. Das Reaktionsgemisch wird so lange bei 60°C gerührt, bis im IR-Spektrum keine Isocyanatbande mehr zu sehen ist. Anschließend werden 11,51 g Emulgator WN (Emulgierhilfsmittel, Fa. Bayer AG) und 5,18 g ®Synperonic PE/F 127 (Emulgierhilfsmittel, Fa. ICI) zugegeben und durch Rühren eine homogene Mischung der Komponenten hergestellt. Aus dieser Lösung wird durch intensives Vermischen mit 359,67 g Wasser mittels eines Dissolvers eine Wasser-in-Öl-Emulsion hergestellt, die anschließend durch Passage durch einen Strahldispergator bei erhöhtem Druck (10 bar) gemäß EP 0101007 eine Phasenumkehr in eine Öl-in-Wasser-Emulsion erfährt. Das Methylethylketon wird im Vakuum abdestilliert. Anschließend wird die Dispersion durch einen Filter mit der Maschenweite 10 µm filtriert. Es resultiert ein Produkt mit folgenden Kenndaten:

| | |
|---|---|
| Auslaufzeit (ISO 4-Becher, 23°C): | 10 s |
| Festkörpergehalt: | 50,3 Gew.-% |
| mittlere Teilchengröße: (Laser-Korrelation-Spektroskopie) | 0,42 µm |
| blockierter NCO-Gehalt: (berechnet, bezogen auf den Festkörper) | 11,64 % |

### 2.2. Dispersion I.2)

In einem 1 l-Vierhalskolben mit Rührer, Innenthermometer und Rückflußkühler werden 192,66 g Polyisocyanatkomponente A2) vorgelegt, in 419,67 g Methylethylketon gelöst und auf 60°C erwärmt. Danach werden 87,12 g Butanonoxim unter Rühren portionsweise hinzugegeben. Das Reaktionsgemisch wird so lange bei 60°C gerührt, bis im IR-Spektrum keine Isocyanatbande mehr zu sehen ist. Anschließend werden 14,90 g Rhodafac PA 17 (Emulgierhilfsmittel, Fa. Rhodia) und 1,20 g des Neutralisationsmittels Triethylamin zugegeben und durch Rühren eine homogene Mischung der Komponenten hergestellt. Aus dieser Lösung wird durch intensives Vermischen mit 195,25 g Wasser mittels eines Dissolvers eine Wasser-in-Öl-Emulsion hergestellt, die anschließend durch Passage durch einen Strahldispergator bei erhöhtem Druck (1 bar) gemäß EP 0101007 eine Phasenumkehr in eine Öl-in-Wasser-Emulsion erfährt. Das Methylethylketon wird im Vakuum abdestilliert. Anschließend wird die Dispersion durch einen Filter mit der Maschenweite 10 µm filtriert. Es resultiert ein Produkt mit folgenden Kenndaten:

| | |
|---|---|
| Auslaufzeit (ISO 4-Becher, 23°C): | 23 s |
| Festkörpergehalt: | 60,0 Gew.-% |
| mittlere Teilchengröße: (Laser-Korrelation-Spektroskopie) | 0,36 µm |
| blockierter NCO-Gehalt: (berechnet, bezogen auf den Festkörper) | 14,25% |

### 2.3. Dispersion I.3)

In einem 1 l-Vierhalskolben mit Rührer, Innenthermometer und Rückflußkühler werden 177,96 g Polyisocyanatkomponente A1) und 96,33 g Polyisocyanatkomponente A2) vorgelegt, in 447,72 g Methylethylketon gelöst und auf 50°C erwärmt. Danach werden 113,16 g Cyclohexanonoxim unter Rühren portionsweise hinzugegeben. Das Reaktionsgemisch wird so lange bei 50°C gerührt, bis im IR-Spektrum keine Isocyanatbande mehr zu sehen ist. Anschließend werden 17,70 g Rhodafac PA 17 (Emulgierhilfsmittel, Fa. Rhodia) und 1,67 g des Neutralisationsmittels N,N-Dimethylethanolamin zugegeben und durch Rühren eine homogene Mischung der Komponenten hergestellt. Aus dieser Lösung wird durch intensives Vermischen mit 350,10 g Wasser mittels eines Dissolvers eine Wasser-in-Öl-Emulsion hergestellt, die anschließend durch Passage durch einen Strahldispergator bei erhöhtem Druck (4 bar) gemäß EP 0101007 eine Phasenumkehr in eine Öl-in-Wasser-Emulsion erfährt. Das Methylethylketon wird im Vakuum abdestilliert. Anschließend wird die Dispersion durch einen Filter mit der Maschenweite 10 µm filtriert. Es resultiert ein Produkt mit folgenden Kenndaten:

| | |
|---|---|
| Auslaufzeit (ISO 4-Becher, 23°C): | 14 s |
| Festkörpergehalt: | 49,6 Gew.-% |
| mittlere Teilchengröße: (Laser-Korrelation-Spektroskopie) | 0,36 µm |
| blockierter NCO-Gehalt: (berechnet, bezogen auf den Festkörper) | 14,25 % |

### Beispiel 3 Herstellung von Basispasten

Es wird die Herstellung von Basispasten beschrieben, wie sie üblicherweise in der Praxis Anwendung finden.

### 3.1. Basispaste auf Basis einer selbstvernetzenden Polyurethandispersion (®Bayhydrol VP LS 2153, Bayer AG), bestehend aus einer in Wasser dispergierten Polyhydroxylverbindung und einem in Wasser dispergierten blockierten Polyisocyanat (nicht erfindungsgemäß)

Für eine Anreibung von 30 Minuten in einer Perlmühle werden nachstehende Komponenten eingewogen und ca. 10 Minuten mittels Dissolver vordispergiert: 667,7 Gew.-Teile der 40 %-igen selbstvernetzenden Polyurethandispersion Bayhydrol VP LS 2153; 4,8 Gew.-Teile eines handelsüblichen Antikratermittels; 4,8 Gew.-Teile eines handelsüblichen Benetzungsmittels; 4,1 Gew.-Teile eines in der Lackindustrie gebräuchlichen Antiabsetzmittels; 10,8 Gew.-Teile eines für wässrige Systeme üblichen Entschäumers, 118,8 Gew.-Teile Titandioxid; 1,3 Gew.-Teile Eisenoxidschwarz; 119,7 Gew.-Teile mikronisierter Schwerspat; 29,2 Gew.-Teile carbonatfreies Talkum und 38,8 Gew.-Teile destilliertes Wasser. Hieraus resultiert eine Paste mit einem Festkörpergehalt von ca. 53,6 Gew.%.

### 3.2. Basispaste auf Basis der erfindungswesentlichen Dispersion I.2) in Kombination mit einer wässrigen Polyhydroxylkomponente II) (Bayhydrol® VP LS 2056, Bayer AG) (erfindungsgemäß)

Nachstehende Komponenten werden eingewogen, ca. 10 Minuten mittels Dissolver vordispergiert und anschließend 30 Minuten in einer gekühlten Perlmühle angerieben: 387,9 Gew.-Teile der 47 %-igen Dispersion der Polyhydroxylverbindung Bayhydrol VP LS 2056; 237,8 Gew.-Teile der 60 %-igen Dispersion I.2); 5,9 Gew.-Teile eines handelsüblichen Antikraaermittels; 5,9 Gew.-Teile eines handelsüblichen Benetzungsmittels; 4,9 Gew.-Teile eines in der Lackindustrie gebräuchlichen Antiabsetzmittels; 13,0 Gew.-Teile eines für wässrige Systeme üblichen Entschäumers; 143,6 Gew.-Teile Titandioxid; 1,6 Gew.-Teile Eisenoxidschwarz; 144,7 Gew.-Teile mikronisierter Schwerspat; 35,3 Gew.-Teile carbonatfreies Talkum und 19,4 Gew.Teile destilliertes Wasser. Hieraus resultiert eine Paste mit einem Festkörpergehalt von ca. 65,0 Gew.%.

### 3.3. Basispaste auf Basis der erfindungswesentlichen Dispersion I.3) in Kombination mit einer wässrigen Polyhydroxylkomponente II) (Bayhydrol® VP LS 2056, Bayer AG) (erfindungsgemäß)

Nachstehende Komponenten werden eingewogen, ca. 10 Minuten mittels Dissolver vordispergiert und anschließend 30 Minuten in einer gekühlten Perlmühle angerieben: 339,9 Gew.-Teile der 47 %-igen Dispersion der Polyhydroxylverbindung Bayhydrol VP LS 2056; 315,3 Gew.-Teile der 49,6 %-igen Dispersion I.3); 5,7 Gew.-Teile eines handelsüblichen Antikratermittels; 5,7 Gew.-Teile eines handelsüblichen Benetzungsmittels; 4,8 Gew.-Teile eines in der Lackindustrie gebräuchlichen Antiabsetzmittels; 12,6 Gew.-Teile eines für wässrige Systeme üblichen Entschäumers, 139,6 Gew.-Teile Titandioxid; 1,5 Gew.-Teile Eisenoxidschwarz; 140,6 Gew.-Teile mikronisierter Schwerspat und 34,3 Gew.-Teile carbonatfreies Talkum. Hieraus resultiert eine Paste mit einem Festkörpergehalt von ca. 63,2 Gew.%.

### Beispiel 4 Herstellung von wässrigen Füllern auf Basis der Basispasten 3.1. bis 3.3.

Die Pasten werden gemäß den in nachfolgender Tabelle angegebenen Verhältnissen durch 10 minütiges Dispergieren mittels eines Dissolvers homogen vermischt und gegebenenfalls mit Wasser auf eine Verarbeitungsviskosität von ≤ 35 s (ISO-Cup 5 mm, ISO 2431) eingestellt. Die Zusammensetzungen und Kenndaten der erhaltenen wässrigen Füller sind in der nachfolgenden Tabelle 1 dargestellt.

**Tabelle 1**

| Füllerbeispiel | 1¹⁾ | 2²⁾ | 3²⁾ | 4²⁾ | 5²⁾ |
|---|---|---|---|---|---|
| Paste 3.1; 53,6 % FK* | 92,9 Gew.-Tle | | | 52,1 Gew.-Tle | 51,9 Gew.-Tle |
| Paste 3.2; 65,0 % FK* | | 98,2 Gew.-Tle | | 43,0 Gew.-Tle | |
| Paste 3.3; 63,2 % FK* | | | 100 Gew.-Tle | | 44,0 Gew.-Tle |
| dest. Wasser | 7,1 Gew.-Tle | 1,8 Gew.-Tle | - | 4,9 Gew.-Tle | 4,1 Gew.-Tle |
| | 100 Gew.-Tle | 100 Gew.-Tle | 100 Gew.-Tle | 100 Gew.-Tle | 100 Gew.-Tle |
| Festkörpergehalt | 49.8 % | 63,8 % | 63,2 % | 55,9 % | 55,6 % |
| Auslaufzeit, 23°C, ISO-Cup 5 mm | 34 s | 30 s | 18 s | 30 s | 35 s |
| Auslaufzeit, 23°C nach 14 d bei 40°C | 26 s | 30 s | 20 s | 30 s | 31 s |

| | | | | | |
|---|---|---|---|---|---|
| *) FK = Festkörpergehalt | | | | | |
| ¹⁾ nicht erfindungsgemäß | | | | | |
| ²⁾ erfindungsgemäß | | | | | |

Die Festgehalte der erfindungsgemäßen Füller 2 bis 5 sind deutlich höher und deren Viskositätsstabilität nach 40°C-Lagerung besser als die des hochwertigen Vergleichsfüllers 1.

Die wässrigen Füller 1 bis 5 wurden mit einer handelsüblichen Fließbecherpistole mit 5 bar Luftdruck bei ca 65 % rel. Feuchte (23°C) auf mit einer kathodisch abgeschiedenen Elektrotauchgrundierung (ca. 20 µm) beschichtete zinkphosphatierte Stahlbleche spritzappliziert.

Die Härtung der Füller erfolgte nach 10 min Ablüftung bei 23°C im Umluftofen zunächst 10 min bei 70°C und anschließend 20 min bei 165°C. Die Trockenfilmstärke betrug ca. 35 µm.

In der nachfolgenden Tabelle 2 sind die Eigenschaften der Füller aufgeführt

**Tabelle 2**

| Füllerbeispiel | 1¹) | 2¹) | 3¹) | 4²⁾ | 5²⁾ |
|---|---|---|---|---|---|
| Erichsen-Tiefung DIN ISO 1520 | 10,0 mm | 9,0 mm | 5,0 mm | 10,0 mm | 10,0 mm |
| Pendelhärte DIN 53157 | 75 s | 108 s | 136 s | 97 s | 121 s |
| Glanz 60° n. Gardner | 64% | 73% | 77% | 65% | 70% |

Die erfindungsgemäßen Füller 2 bis 5 haben im Vergleich zum handelsüblichen Füller 1 eine sehr hohe Härte und eine für diese Härte sehr gut Elastizität. Die Glanzwerte der erfindungsgemäßen Füller 2 bis 5 liegen auf ähnlichem Niveau wie der Glanzwert des handelsüblichen Füllers 1.

Auf die Füllerschichten wurde ein handelsüblicher Automobildecklack auf Basis Alkyd/Melaminharz mittels einer luftzerstäubenden Spritzpistole mit einer Trockenfilmstärke von ca. 30 µm aufgebracht und 30 min bei 130°C ausgehärtet.

Die wichtigsten, für die Fülleranwendung entscheidenden Prüfergebnisse sind in der nachfolgenden Tabelle zusammengefaßt. Nicht angegebene Beständigkeitswerte, wie z.B. Lösemittel-, Wasser- und Salzsprühfestigkeit, entsprechen vollständig den Anforderungen der Praxis.

### Benutzte Prüfmethoden

Decklackstand: Messung der Welligkeit mittels eines Wave Scan Messgerätes der Fa. Byk
Steinschlagfestigkeit: Als Prüfgeräte wurden verwendet
   a) Steinschlagprüfgerät nach VDA (Fa. Erichsen, Modell 508) mit jeweils 2 mal 500 g Stahlschrot (kantig, 4-5 mm) beschossen mit einem Luftdruck von 1,5 bar bei 23°C. Abmusterungen wurden durchgeführt bezüglich Durchschläge bis auf das Blech (0 bis 10, 0 = keine Durchschläge, 10 = sehr viele Durchschläge).
   b) Einzelschlagprüfgerät ESP-10 nach BMW Norm DBP Nr 34.31.390 (Fa. Byk), gemessen werden die Abplatzungen des Füllers vom Blech in mm.

### Decklackstand, Messung mittels Wave Scan (Byk), (korrigierte Werte angegeben)

| Füllerbeispiel | 1¹⁾ | 2²⁾ | 3²⁾ | 4²⁾ | 5²⁾ |
|---|---|---|---|---|---|
| Kurzwelligkeit | 6,2 | 6,3 | 5,4 | 5,0 | 4,2 |
| Langwelligkeit | 29,3 | 26,7 | 25,3 | 23,1 | 19,3 |

Je niedriger die Zahlenwerte sowohl bei der Kurz- als auch bei der Langwelligkeit sind, desto besser ist der Decklackstand. Die erfindungsgemäßen Füller 2 bis 5 führen demnach zu einem besseren Decklackstand als der Vergleichsfüller 1.

### Steinschlagtest

2 mal 500 g Stahlschrot, 1,5 bar (Kennwert 1-10)

| Füllerbeispiel | 1¹⁾ | 2¹⁾ | 3¹⁾ | 4²⁾ | 5²⁾ |
|---|---|---|---|---|---|
| VDA-Multischlag: Kennwert für Durchschläge | 2 | 2 | 2 | 2 | 2 |
| BMW-Einzelschlag bei -20 °C | < 1 mm | 1,0 mm | 1,0 mm | < 1 mm | < 1mm |

Die erfindungsgemäßen Füller 4 bis 5 liegen auf gleich hohem Niveau wie der hochwertige Vergleichsfüller 1, obwohl die erfindungsgemäßen Füller eine deutlich höhere Härte besitzen. Dieses Ergebnis ist überraschend und so nicht vorhersehbar. Die erfindungsgemäßen Füller 2 und 3 haben eine geringfügig schlechtere Steinschlagfestigkeit.

### Zusammenfassung und Diskussion der Ergebnisse

Die erfindungsgemäßen Füller 2 bis 5 zeichnen sich durch einen sehr hohen Festkörpergehalt und eine sehr hohe Härte aus. Daher waren nur eine geringe Elastizität verbunden mit einer mangelhaften Steinschlagfestigkeit sowie einem schlechten Decklackstand zu erwarten. Die Prüfergebnisse zeigen jedoch deutlich, dass die erfindungsgemäßen Füller entgegen dem bisherigen Stand der Technik sowohl gute Elastizitätswerte als auch sehr gute Steinschlagfestigkeiten und Decklackstände aufweisen und damit einem hochwertigen, handelsüblichen Polyurethanfüller überlegen sind. Sie haben ein bisher nicht gekanntes Qualitätsniveau bezüglich des gesamten Eigenschaftsspektrums.

## Patentansprüche

1. Bindemittelgemisch für wässrige Einbrennlacke bestehend aus
I) speziellen in Wasser dispergierten blockierten Polyisocyanaten,
II) in Wasser löslichen oder dispergierbaren Polyhydroxylverbindungen,
III) gegebenenfalls in Wasser löslichen oder dispergierbaren Vernetzerharzen und
IV) gegebenenfalls weiteren in Wasser löslichen oder dispergierbaren Substanzen,
**dadurch gekennzeichnet, dass** die Komponente I) aus
A) 40 bis 80 Gew.-% einer oder mehrerer Polyisocyanatkomponenten,
B) 10 bis 40 Gew.-% eines oder mehrerer im Sinne der Isocyanat-Additionsreaktion monofunktioneller Blockierungsmittel für Isocyanatgruppen,
C) 1 bis 30 Gew.-% eines oder mehrerer Hydrophilierungsmittel,
D) gegebenenfalls weiteren Vernetzersubstanzen und
E) gegebenenfalls üblichen Zusatzmitteln besteht,
mit der Maßgabe, dass die Komponente I) entweder nach einem Direktdispergierverfahren oder nach dem Phasenumkehrverfahren mittels einer Dispergiervorrichtung mit hoher volumenbezogener Dispergierleistung hergestellt wurde und eine mittlere Teilchengröße der Dispersionspartikel von 0,05 bis 10 µm Teilchendurchmesser aufweist und das Bindemittelgemisch einen Feststoffgehalt von ≥ 55 Gew.-% aufweist.

2. Bindemittelgemisch gemäß Anspruch 1, **dadurch gekennzeichnet, dass** als Polyisocyanatkomponenten A) der Komponente I) aliphatische und/oder cycloaliphatische Biuret-, Isocyanurat-, Urethan-, Uretdion-, Allophanat-und/oder Iminooxadiazindiongruppen aufweisende Polyisocyanate eingesetzt werden.

3. Bindemittelgemisch gemäß Anspruch 1, **dadurch gekennzeichnet, dass** als Blockierungsmittel B) der Komponente I) Oxime und/oder Pyrazole eingesetzt werden.

4. Bindemittelgemisch gemäß Anspruch 1, **dadurch gekennzeichnet, dass** als Hydrophilierungsmittel C) der Komponente I) externe Emulgatoren eingesetzt werden.

5. Bindemittelgemisch gemäß Anspruch 1, **dadurch gekennzeichnet, dass** als Komponente II) Polyhydroxypolyester, Polyhydroxypolyether, Polyhydroxypolyurethane, Polyhydroxycarbonate, urethanmodifizierte Polyesterpolyole, urethanmodifizierten Polyetherpolyole, urethanmodifizierte Polycarbonatpolyole, Hydroxylgruppen aufweisende Polymerisate, Polyesterpolyacrylatpolyole, Polyetherpolyacrylatpolyole, Polyurethanpolyacrylatpolyole, Polyesterpolyurethane, Polyetherpolyurethane, Polycarbonatpolyrethane, Polyetherpolyester oder deren Mischungen eingesetzt werden.

6. Bindemittelgemisch gemäß Anspruch 1, **dadurch gekennzeichnet, dass** als Komponente III) in Wasser lösliche oder dispergierbare blockierten Polyisocyanate eingesetzt werden.

7. Bindemittelgemisch gemäß Anspruch 1, **dadurch gekennzeichnet, dass** als Komponente III) in Wasser lösliche oder dispergierbare Aminoharze eingesetzt werden.

8. Verwendung der Bindemittelgemische gemäß Anspruch 1 bis 7 zur Herstellung von, gegebenenfalls die üblichen Hilfs- und Zusatzmittel der Beschichtungstechnologie enthaltenden, wässrigen Einbrennlacken.

9. Verwendung des wässrigen Einbrennlackes gemäß Anspruch 8 zur Herstellung von Füllern für Metallteile.

10. Verwendung des wässrigen Einbrennlackes gemäß Anspruch 8 zur Herstellung von Füllern für Automobilkarosserieteile.

## Revendications

1. Liants mélangés pour produits de revêtement à cuire au four, consistant en :
I) des polyisocyanates bloqués spéciaux dispersés dans l'eau,
II) des composés polyhydroxylés solubles ou dispersables à l'eau,
III) le cas échéant des résines réticulantes solubles ou dispersables à l'eau et
IV) le cas échéant d'autres substances solubles ou dispersables à l'eau,
et **caractérisés en ce que** le composant I) consiste en
A) 40 à 80 % en poids d'un ou plusieurs composants polyisocyanate,
B) 10 à 40 % en poids d'un ou plusieurs agents bloquants des groupes isocyanate, monofonctionnels à l'égard de la réaction d'addition des isocyanates,
C) 1 à 30 % en poids d'un ou plusieurs agents hydrophilisants,
D) le cas échéant d'autres substances réticulantes et
E) le cas échéant des additifs usuels,
sous réserve que le composant I) a été préparé soit par dispersion directe, soit avec inversion de phase à l'aide d'un dispositif de dispersion à haute puissance rapportée au volume et a une dimension moyenne des particules en dispersion de 0,05 à 10 µm de diamètre, le liant mélangé ayant une teneur en matières solides supérieure ou égale à 55 % en poids.

2. Liant mélangé selon la revendication 1, **caractérisé en ce que** les composants polyisocyanate A) du composant I) sont des polyisocyanates aliphatiques et/ou cycloaliphatiques à groupes biuret, isocyanurate, uréthane, uret-dione, allophanate et/ou iminooxadiazinedione.

3. Liant mélangé selon la revendication 1, **caractérisé en ce que** l'agent bloquant B) du composant I) consiste en oximes et/ou pyrazoles.

4. Liant mélangé selon la revendication 1, **caractérisé en ce que** l'agent hydrophilisant C) du composant I) consiste en agents émulsionnants externes.

5. Liant mélangé selon la revendication 1, **caractérisé en ce que** le composant II) consiste en polyhydroxypolyesters, polyhydroxypolyéthers, polyhydroxypolyuréthannes, polyhydroxycarbonates, polyesterpolyols à modification uréthanne, polyéther-polyols à modification uréthanne, polycarbonate-polyols à modification uréthane, polymères à groupes hydroxy, polyester-polyacrylate-polyols, polyéther-polyacrylate-polyols, polyuréthanne-polyacrylate-polyols, polyester-polyuréthannes, polyéther-polyuréthanne, polycarbonate-polyuréthannes, polyétherpolyesters ou leurs mélanges.

6. Liant mélangé selon la revendication 1, **caractérisé en ce que** le composant III) consiste en polyisocyanates bloqués solubles ou dispersables à l'eau.

7. Liant mélangé selon la revendication 1, **caractérisé en ce que** le composant III) consiste en résines aminées solubles ou dispersables à l'eau.

8. Utilisation du liant mélangé selon les revendications 1 à 7 pour la préparation de produits de revêtement aqueux à cuire au four contenant le cas échéant les produits auxiliaires et additifs usuels de l'industrie des peintures et vernis.

9. Utilisation du produit de revêtement aqueux à cuire au four selon la revendication 8 pour la préparation de mastics pour pièces métalliques.

10. Utilisation du produit de revêtement aqueux à cuivre au four selon la revendication 8 pour la préparation de mastics, pour pièces de carrosserie d'automobile.

## Claims

1. Binder mixture for aqueous stoving lacquers composed of
I) special blocked polyisocyanates dispersed in water,
II) water-soluble or -dispersible polyhydroxy compounds,
III) optionally water-soluble or -dispersible crosslinking resins and
IV) optionally further water-soluble or -dispersible substances,
**characterized in that** component I consists of:
A) 40 to 80 wt.% of one or more polyisocyanate components,
B) 10 to 40 wt.% of one or more monofunctional blocking agents within the context of the isocyanate addition reaction for isocyanate groups,
C) 1 to 30 wt.% of one or more hydrophilicity agents,
D) optionally further crosslinking substances,
E) optionally conventional additives,
with the proviso that component I) has been prepared either by a direct dispersing process or by the phase inversion process by means of a dispersing device with a high dispersing output per unit volume and has an average particle size of the dispersion particles of 0.05 to 10 µm particle diameter, and the binder mixture has a solids content of ≥ 55 wt.%.

2. Binder mixture according to Claim 1, **characterized in that** as polyisocyanate components A) of component I) use is made of aliphatic and/or cycloaliphatic polyisocyanates containing biuret, isocyanurate, urethane, uretdione, allophanate and/or iminooxadiazinedione groups.

3. Binder mixture according to Claim 1, **characterized in that** as blocking agents B) of component I) use is made of oximes and/or pyrazoles.

4. Binder mixture according to Claim 1, **characterized in that** as hydrophilicity agents C) of component I) use is made of external emulsifiers.

5. Binder mixture according to Claim 1, **characterized in that** polyhydroxypolyesters, polyhydroxypolyethers, polyhydroxypolyurethanes, polyhydroxycarbonates, urethane-modified polyester polyols, urethane-modified polyether polyols, urethane-modified polycarbonate polyols, polymers containing hydroxyl groups, polyester-polyacrylate polyols, polyether-polyacrylate polyols, polyurethane-polyacrylate polyols, polyesterpolyurethanes, polyether-polyurethanes, polycarbonate-polyurethanes, polyether-polyesters or mixtures thereof are used as component (II).

6. Binder mixture according to Claim 1, **characterized in that** water-soluble or -dispersible blocked polyisocyanates are used as component (III).

7. Binder mixture according to Claim 1, **characterized in that** water-soluble or -dispersible amino resins are used as component (III).

8. Use of the binder mixtures according to Claims 1 to 7 for the preparation of aqueous stoving lacquers which optionally comprise the conventional auxiliary substances and additives of coating technology.

9. Use of the aqueous stoving lacquer according to Claim 8 for the preparation of filler compositions for metal components.

10. Use of the aqueous stoving lacquer according to Claim 8 for the preparation of filler compositions for car body components.
